# EUROPEAN PATENT SPECIFICATION

(11) **EP 4 182 261 B1**
(45) Date of publication and mention of the grant of the patent: **07.05.2025**
(21) Application number: 21740084.5
(22) Date of filing: 09.07.2021
(51) Int. Cl.: B67D 7/76, B01D 29/33, B01D 35/02, B01D 35/15, B67D 7/04, B01D 35/153

(54) **FILTER DEVICE FOR A FUEL DISPENSING SYSTEM**
FILTERVORRICHTUNG FÜR EIN KRAFTSTOFF-ABGABESYSTEM
DISPOSITIF DE FILTRATION POUR SYSTÈME DE DISTRIBUTION DE CARBURANT

(30) Priority: 17.07.2020 SE 2050908
(43) Date of publication of application: 24.05.2023
(73) Proprietor: DOVER FUELING SOLUTIONS UK LIMITED, Edinburgh EH3 8EH (GB)
(72) Inventor: LARSSON, Bengt I, 274 53 Skivarp (SE); DICKEL, Martin, 37586 Dassel (DE); JOHANSSON, Marie, 237 33 Bjärred (SE)
(74) Representative: AWA Sweden AB
(86) International application number: PCT/EP2021/069101
(87) International publication number: WO 2022/013079

(56) References cited:
- JP-B2- 4 150 640
- US-A- 5 122 264
- US-A- 5 215 655

## Description

### Technical field

The invention relates to a filter device for a fuel dispensing system and a fuel dispensing system having such a filter device.

### Background art

A typical fuel dispensing environment, such as the forecourt of a retail fuel dispensing station, comprises a large number of components both for fuel handling and for conducting fuel dispensing transactions. Examples of such components include fuel dispensers, fuel piping, underground storage tanks, submersible turbine and self-contained pumps, motors, and dispensing nozzles. Further, fuel dispensers themselves typically contain flow meters, pulsers, control electronics, valves, card readers, manifolds, and internal fuel and vapour recovery piping, among others. Many of these components are subject to regulatory requirements to maintain a high degree of accuracy and safety and to guard against environmental impact.

A common failure of high flow fuel systems is cavitation. The combination of too much heat or too much inlet restriction can create this operating condition, in which the liquid fuel literally vaporizes (boils) inside the pump assembly. Symptoms of this operating condition may include one or more of the following; dramatic loss of flow rate, gauge bouncing, ratchet or grinding sounds from pump, inconsistent or loss of fuel pressure and temperatures above 50°C.

Loss of fuel delivery pressure will also result in a lean-out condition, and may also result in engine damage. Typically, even with very short time periods of exposure to cavitation (depending on severity) may cause damage to the fuel pump. Such damage results in a direct loss of capacity and efficiency. Eventually, the fuel system will not be able to build or maintain pressure.

JP 4 150640 B2 discloses a protector case covering an upper part outer circumference of a filter element, existing in a lower side of a inlet port and partitioning a case to upper part and a lower part liquid-tightly. Fuel flowing in the case from the inlet port passes through a filter element and flows into inside of the protector case after flowing to an outer circumference side from an upper end surface inner circumference side of the filter element through a plurality of a slits formed inner circumference side of a top part of the protector case.

US 5 122 264 A discloses a liquid fuel dispensing system with improved means of preventing water and particulate contamination. The system has an underground fuel storage tank, a pump for moving fuel from the fuel storage tank to a pump fuel outlet, an underground enclosed sump in which at least a portion of the pump is located, a filtration vessel within the sump having a fuel inlet connected to the pump fuel outlet and a fuel outlet, a filter element in the filtration vessel in series with fuel flow therethrough.

One way of solving - or at least reducing - the cavitation problem is to reduce the vertical pumping distance for the fuel in the fuel dispensing system. The conventional fuel dispensing system is arranged with the pump motor in the bottom of the hydraulics compartment, the pump on top of the pump motor, and the flow meter on the top. As stated above, a problem related to such a solution is the maximum vertical distance that fuel can be pumped. The maximum vertical pumping distance depends on temperature can be stretched to about three meters.

### Summary of the invention

It is an objective of the present invention to mitigate, alleviate or eliminate one or more of the above-identified deficiencies in the art and disadvantages singly or in any combination and solve at least the above-mentioned problems.

According to a first aspect of the invention, these and other objects are achieved, in full or at least in part, by a filter device for fuel dispensing system according to independent claim 1.

In order to overcome the problem of cavitation appearing in the pumped-up fuel, the hydraulics of the fuel dispenser has been rearranged in the fuel dispensing system according to the present invention. The vertical pumping distance has been reduced by arranging the pump in the bottom of the hydraulics compartment, the pump motor on top of the pump, and the flow meter on the top. This arrangement thus reduces the vertical distance between the pump and the underground storage tank.

However, this also reduces the distance between the pump and ground level. It is in this space that a filter device is placed to filter the fuel between the underground storage tanks and pump of the fuel dispenser. A new filter device is therefore needed with a smaller vertical extension, such that it fits between the pump and ground level. A filter device as presented by the first aspect of the invention allows the vertical extension of the filter device to be significantly reduced, thus allowing the fuel dispenser to be arranged with the pump in the bottom. This will allow the vertical distance to be reduced between the pump and the underground storage tank, which will reduce the risk of cavitation appearing in the pumped-up fuel.

An additional effect of such a filter device is that the filter device can be easily serviced without risk losing the entire liquid column between the filter device and the underground storage tanks. By removing a top of the filter device, the entire interior of the filter device, including the filter, can be reached and serviced in a simple manner without removing the check valve arranged in the first chamber covering the inlet bore.

Further, the risk of leakage between the filter device and the underground storage tanks is reduced. This as the inlet check valve, placed between the filter device and the underground storage tanks, is placed in a first chamber separate from the filter of the filter device, arranged in a second chamber. Thus, any debris filtered out by the filter does not risk falling down into the inlet check valve, which could have blocked it from completely closing. This has the additional effect that the outlet check valve which previously had to be installed between the filter device and the pump can be removed.

The first chamber and the second chamber may be arranged at substantially the same according to the direction of the first central axis and the second central axis.

By this, the extension of the filter device in a height direction may be reduced. Also, the fuel will reach the second chamber from a horizontal direction.

The diameter of the first chamber may be smaller than the diameter of the second chamber.

The filter may have the form of a truncated cone with filtering surfaces along side walls of the truncated cone.

By this, the fuel may be filtered in a substantially horizontal direction. Thus, any debris which is filtered out will not get stuck on the filtering surfaces. Instead the debris may fall down on a surface below the filtering surfaces. This will also ensure that the filter can be more easily cleaned.

The filter may have the form of a cylinder with filtering surfaces along side walls of the cylinder.

By this, the fuel may be filtered in a substantially horizontal direction. Thus, any debris which is filtered out will not get stuck on the filtering surfaces. Instead, the debris will fall down on a surface below the filtering surfaces. This will also ensure that the filter can be more easily cleaned.

The first chamber may be extended by an edge surrounding partially the inlet bore and extending in a direction of the first central axis. The outlet bore may have an extension that is displaced in relation to the extension of the inlet bore at an angle of approximately 90°.

Accordingly, the filter device will be more compact and its size can be reduced.

The filter device may further comprise a drainage bore arranged at a bottom section of the second chamber, the drainage bore being intended to be connected to the fuel dispensing system.

By this, the second chamber can be easily drained. This may be done without affecting the first chamber. Further, the pump, which is connected to the filter device, may also be easily drained through this drainage bore.

According to a second aspect of the invention, these and other objects, and/or advantages that will be apparent from the following description of embodiments, are achieved, in full or at least in part, by a fuel dispensing system comprising a filter device according to the features described above.

Effects and features of the second aspect of the present invention are largely analogous to those described above in connection with the first aspect of the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

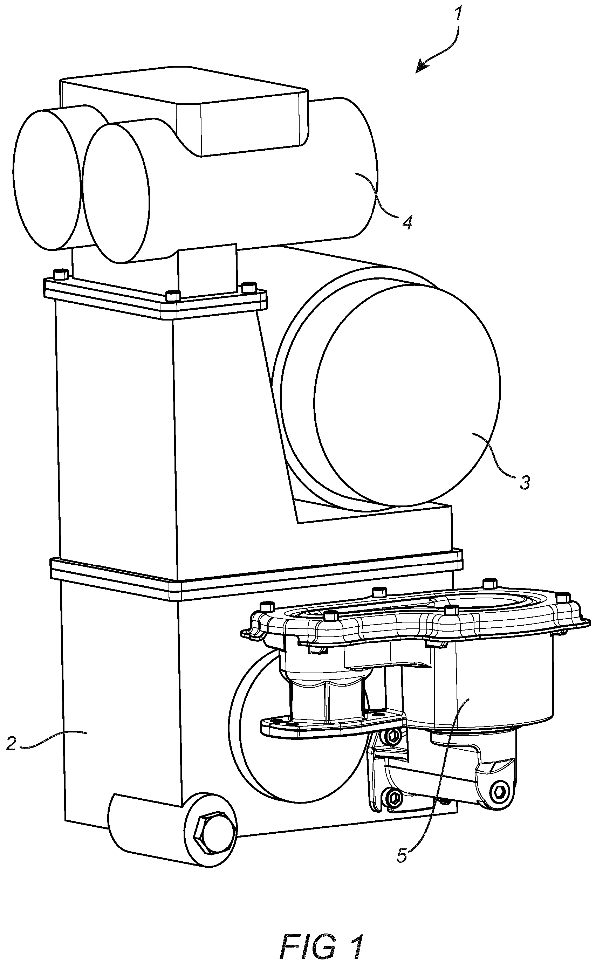

As used herein, the term "horizontal direction" means the horizontal direction of the filter device or fuel dispensing system - marked in Fig. 1 - viewed from the front of the filter device or fuel dispensing system when placed standing up.

As used herein, the term "vertical distance" means the distance in a vertical direction of the filter device or fuel dispensing system - marked in Fig. 1 - viewed from the front of the filter device or fuel dispensing system when placed standing up.

As used herein, the term "comprising" and variations of that term are not intended to exclude other additives, components, integers or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1 is a perspective view of one exemplary embodiment of a portion of a fuel dispensing system according to a second aspect of the invention.
Fig. 2 is a perspective view of one exemplary embodiment of a filter device according to a first aspect of the invention.
Fig. 3 is a cross-section of the filter device in Fig. 2.
Fig. 4 is a perspective view of the filter device in Fig. 2 and Fig. 3 when viewed from above.

### Detailed description of preferred embodiments of the invention

Fig. 1 illustrates an exemplary embodiment of a portion of a fuel dispensing system 1. The components of the fuel dispensing system 1 illustrated in Fig. 1 are arranged in a hydraulics compartment of a fuel dispensing unit (not shown). The primary components are here constituted by a fuel pump 2 arranged in the bottom, a pump motor 3 arranged on top of the fuel pump 2, and a flow meter 4 arranged on the top. A filter device 5 is arranged in fluid communication with the fuel pump 2 in such a way that any fuel drawn from the underground tank (not shown) of the fuel dispensing system 1 will pass through the filter device 5 before reaching the fuel pump 2.

A conventional fuel dispensing system is arranged with the pump motor 3 in the bottom, the fuel pump 2 on top of the pump motor 3, and the flow meter 4 on the top. In such a system, the fuel is pumped vertically from the underground tank up and into the filter device 5 which is connected to the fuel pump 2 and thus arranged at the same vertical distance from the underground tank as the fuel pump 2. The vertical pumping distance of the fuel is, however, a critical factor in the fuel dispensing system 1. Especially, when the fuel dispensing unit is placed in a country with warm weather. A common failure of high flow fuel systems is cavitation. The combination of too much heat or too much inlet restriction can create this operating condition, in which the liquid fuel literally vaporizes (boils) inside the pump assembly. Symptoms of this operating condition may include one or more of the following; dramatic loss of flow rate, gauge bouncing, ratchet or grinding sounds from pump, inconsistent or loss of fuel pressure and temperatures above 50°C.

Loss of fuel delivery pressure will also result in a lean-out condition, and may also result in engine damage. Typically, even with very short time periods of exposure to cavitation (depending on severity) may cause damage to the fuel pump. Such damage results in a direct loss of capacity and efficiency. Eventually, the fuel system will not be able to build or maintain pressure.

In an attempt to solve this problem, the fuel pump 2 and thus the filter device 5 have been placed below the pump motor 3 instead of on top of the same. This way, the vertical pumping distance of the fuel from the underground tank to the fuel pump 2 is reduced and thus also the risk of cavitation during use. However, since also the distance between the fuel pump 2 and ground level is reduced, the design of the filter device 5 has been completely changed in order for it to achieve a smaller vertical extension to fit into the space between the fuel pump 2 and ground level.

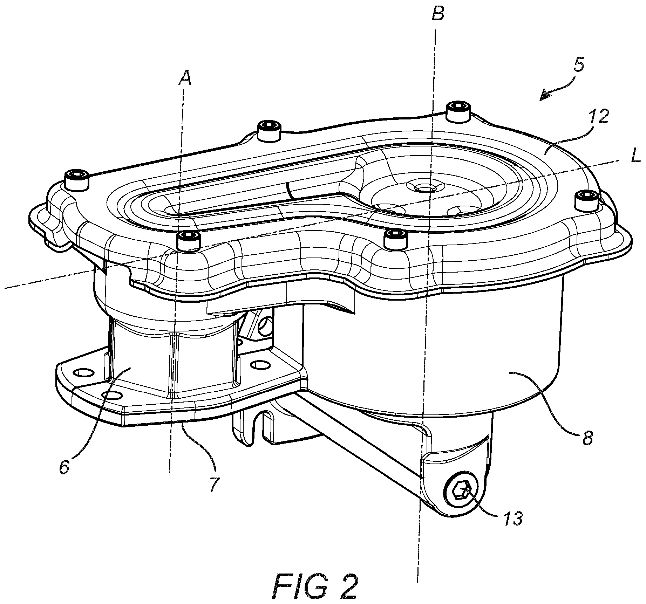

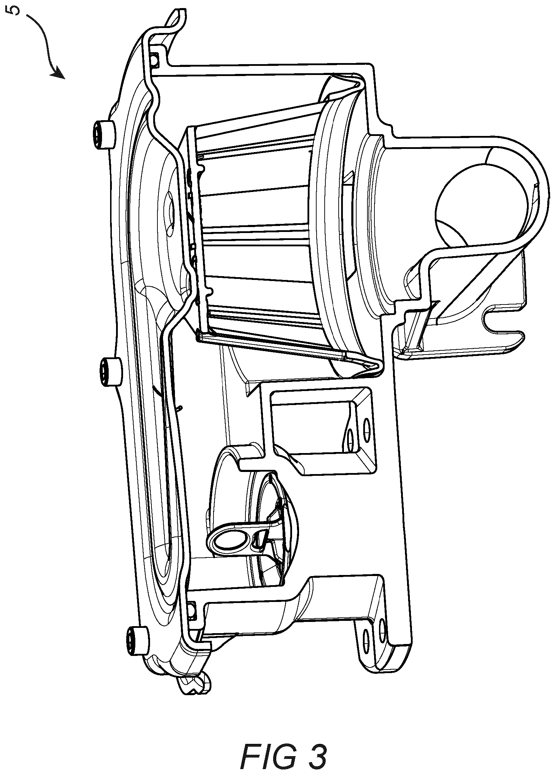

Fig. 2 to Fig. 4 illustrate an exemplary embodiment of the filter device 5. The filter device 5 has a first chamber 6 extending along a first central axis A and having an inlet bore 7 intended to be connected to a fuel tank, a second chamber 8 extending along a second central axis B and having an outlet bore 9 intended to be connected to a fuel dispensing system 1. The first chamber 6 and the second chamber 8 are displaced from each other in a longitudinal direction L of the filter device 5. Specifically, the first chamber 6 is located at a predetermined distance from the second chamber 8 in the longitudinal direction L of the filter device 5, wherein the first central axis A of the first chamber 6 is separated from the second central axis B of the second chamber 8.

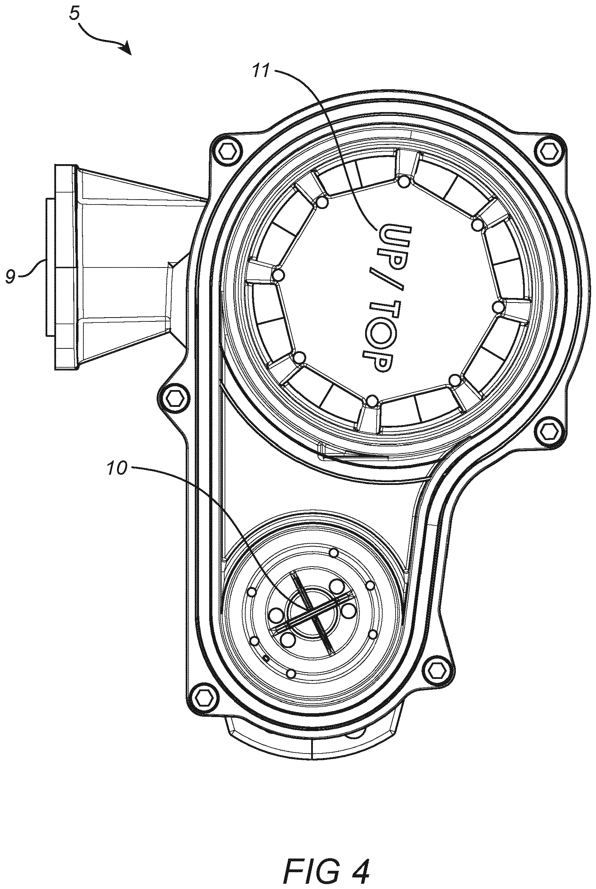

As can be seen from Fig. 4, the first chamber 6 and the second chamber 8 are arranged at a distance from each other while still being in direct fluid communication with each other. The first chamber 6 and the second chamber 8 are arranged at substantially the same height in a height direction of the filter device 5, i.e. they are arranged at substantially the same height from ground level. The first chamber 6 also has a smaller diameter than the second chamber 8.

The inlet bore 7 is connected to the underground fuel tank via a fuel line (not shown) and the outlet bore 9 is connected to an inlet of the fuel pump 2. The first chamber 6 is adapted to receive a check valve 10 which is placed in the first chamber 6 in order to prevent fuel in the fuel line from returning back into the underground tank when the fuel pump 2 is not in use. The second chamber 8 is adapted to receive a filter 11 which is placed in the second chamber in a manner such that the fuel passing through the second chamber 8, from the first chamber 6, and into the fuel pump 2, passes the filter 11 in order to be filtered before reaching the fuel pump 2. The filter 11 has the form of a truncated cone with filtering surfaces along side walls of the truncated cone. The filter 11 is provided in the second chamber 8 of the filter device 5 in such a manner that the fuel passing through the filter will pass through the side walls of the truncated cone. This means that the fuel will be filtered in a substantially horizontal direction. Thus, any debris which is filtered out will not get stuck on the filtering surfaces. Instead, the debris will fall down on a surface below the filtering surfaces.

The shape of the filter device 5 can be described as two cylinders with different diameters and depth being formed into one single unit with a small space between them. When fuel enters the first chamber 6 via the inlet bore 6 it rises until the first chamber is filled and from there into the second chamber 8 via the small space between the two chambers. The fuel thus enters the second chamber 8 from above, goes through side walls of the filter 11 and down through the outlet bore and into the fuel pump 2.

The filter device 5 has a lid 12 covering the first chamber 6 and the second chamber 8. The lid 12 protects the first chamber 6 and the second chamber 8 from outer factors while giving easy access upon service or the like of the check valve 10 and the filter 11. The filter device 5 also has a drainage bore 13 arranged at a bottom section of the second chamber 8.

When a nozzle of the fuel dispensing system 1 is removed from its nozzle boot, a control unit is alerted and the pump motor 3 driving the fuel pump 2 is started. The pump motor 3 is normally operated at a fixed speed, and therefore, the fuel is circulated from the pressure side P to the suction side S via a bypass channel at full capacity (for example at a rate of 80 litres/minute) until the actual refuelling of a vehicle has started. When the nozzle is opened and the fuel starts flowing therefrom, a pressure drop will occur and the pressure from the fuel applied on a spring valve in the bypass channel will decrease. In other words, if the nozzle starts to deliver fuel to a vehicle at a flow rate of 40 litres/minute, the fuel flow rate through the bypass channel will decrease to 40 litres/minute.

The fuel is drawn from the underground tank and pumped up and into the filter device 5 via the fuel line. From there, the fuel goes through the fuel pump 2, the flow meter, and out through the nozzle via a fuel hose.

It is understood that other variations in the present invention are contemplated and in some instances, some features of the invention can be employed without a corresponding use of other features.

For instance, filter 11 may have the form of a cylinder with filtering surfaces along side walls of the cylinder.

## Claims

1. Filter device (5) for fuel dispensing system (1), comprising:
a first chamber (6) extending along a first central axis (A) and having an inlet bore (7) intended to be connected to a fuel tank,
a second chamber (8) extending along a second central axis (B) and having an outlet bore (9) intended to be connected to a fuel dispensing system (1), the second chamber (8) being arranged at substantially the same height as the first chamber (6) and in fluid communication with the first chamber (6),
a check valve (10) arranged in the first chamber (6) and covering the inlet bore (7), and
a filter (11) arranged in the second chamber (8) and covering the outlet bore (9),
wherein the first chamber (6) is located at a predetermined distance from the second chamber (8) in a longitudinal direction (L) of the filter device (5), the first central axis (A) of the first chamber (6) being separated from the second central axis (B) of the second chamber (8),
wherein the first central axis (A) is parallel to the second central axis (B), and
wherein the longitudinal direction (L) of the filter device (5) is perpendicular to the first central axis (A) and the second central axis (B)
**characterized by** a lid (12) covering the first chamber (6) and the second chamber (8).

2. Filter device (5) according to
claim 1, wherein a diameter of the first chamber (6) is smaller than a diameter of the second chamber (8).

3. Filter device (5) according to any one of the preceding claims,
wherein the filter (11) has the form of a truncated cone with filtering surfaces along side walls of the truncated cone.

4. Filter device (5) according to claim 1 or 2, wherein
the filter (11) has the form of a cylinder with filtering surfaces along side walls of the cylinder.

5. Filter device (5) according to any one of the preceding claims,
wherein the first chamber (6) is extended by an edge surrounding partially the inlet bore (7) and extending in a direction of the first central axis (A).

6. Filter device (5) according to any one of the preceding claims,
wherein the outlet bore (9) has an extension that is displaced in relation to the extension of an inlet bore (7) at an angle of approximately 90°.

7. Filter device (5) according to any one of the preceding claims, further comprising a drainage bore (13) arranged at a bottom section of the second chamber (8), the drainage bore (13) being intended to be connected to the fuel dispensing system (1).

8. A fuel dispensing system (1), comprising a filter device (5) according to any one of the preceding claims.

## Patentansprüche

1. Filtervorrichtung (5) für ein Kraftstoffabgabesystem (1), umfassend:
eine erste Kammer (6), die sich entlang einer ersten Mittelachse (A) erstreckt und eine Einlassbohrung (7) aufweist, die dazu bestimmt ist, mit einem Kraftstofftank verbunden zu werden,
eine zweite Kammer (8), die sich entlang einer zweiten Mittelachse (B) erstreckt und eine Auslassbohrung (9) aufweist, die dazu bestimmt ist, mit einem Kraftstoffabgabesystem (1) verbunden zu werden, wobei die zweite Kammer (8) auf im Wesentlichen der gleichen Höhe wie die erste Kammer (6) angeordnet ist und in Fluidverbindung mit der ersten Kammer (6) steht,
ein Rückschlagventil (10), das in der ersten Kammer (6) angeordnet ist und die Einlassbohrung (7) abdeckt, und
einen Filter (11), der in der zweiten Kammer (8) angeordnet ist und die Auslassbohrung (9) abdeckt,
wobei sich die erste Kammer (6) in einem vorbestimmten Abstand von der zweiten Kammer (8) in einer Längsrichtung (L) der Filtervorrichtung (5) befindet, wobei die erste Mittelachse (A) der ersten Kammer (6) von der zweiten Mittelachse (B) der zweiten Kammer (8) getrennt ist,
wobei die erste Mittelachse (A) parallel zu der zweiten Mittelachse (B) ist, und
wobei die Längsrichtung (L) der Filtervorrichtung (5) rechtwinklig zu der ersten Mittelachse (A) und der zweiten Mittelachse (B) ist,
**gekennzeichnet durch** einen Deckel (12), der die erste Kammer (6) und die zweite Kammer (8) abdeckt.

2. Filtervorrichtung (5) nach
Anspruch 1, wobei ein Durchmesser der ersten Kammer (6) kleiner als ein Durchmesser der zweiten Kammer (8) ist.

3. Filtervorrichtung (5) nach einem der vorhergehenden Ansprüche, wobei der Filter (11) die Form eines Kegelstumpfes mit Filterflächen entlang Seitenwänden des Kegelstumpfes aufweist.

4. Filtervorrichtung (5) nach Anspruch 1 oder 2, wobei der Filter (11) die Form eines Zylinders mit Filterflächen entlang Seitenwänden des Zylinders aufweist.

5. Filtervorrichtung (5) nach einem der vorhergehenden Ansprüche, wobei die erste Kammer (6) durch einen Rand verlängert ist, der die Einlassbohrung (7) teilweise umgibt und sich in einer Richtung der ersten Mittelachse (A) erstreckt.

6. Filtervorrichtung (5) nach einem der vorhergehenden Ansprüche, wobei die Auslassbohrung (9) eine Verlängerung aufweist, die in Bezug auf die Verlängerung einer Einlassbohrung (7) unter einem Winkel von etwa 90° versetzt ist.

7. Filtervorrichtung (5) nach einem der vorhergehenden Ansprüche, ferner umfassend eine Ablaufbohrung (13), die an einem Bodenabschnitt der zweiten Kammer (8) angeordnet ist, wobei die Ablaufbohrung (13) dazu bestimmt ist, mit dem Kraftstoffabgabesystem (1) verbunden zu werden.

8. Kraftstoffabgabesystem (1), umfassend eine Filtervorrichtung (5) nach einem der vorhergehenden Ansprüche.

## Revendications

1. Dispositif de filtre (5) pour un système de distribution de carburant (1), comprenant :
une première chambre (6) s'étendant le long d'un premier axe central (A) et comportant un orifice d'entrée (7) destiné à être raccordé à un réservoir de carburant,
une seconde chambre (8) s'étendant le long d'un second axe central (B) et comportant un orifice de sortie (9) destiné à être raccordé à un système de distribution de carburant (1), la seconde chambre (8) étant placée sensiblement à la même hauteur que la première chambre (6) et en communication fluidique avec la première chambre (6),
un clapet de non-retour (10) placé dans la première chambre (6) et couvrant l'orifice d'entrée (7), et
un filtre (11) placé dans la seconde chambre (8) et couvrant l'orifice de sortie (9),
la première chambre (6) étant située à une distance prédéterminée de la seconde chambre (8) dans une direction longitudinale (L) du dispositif de filtre (5),
le premier axe central (A) de la première chambre (6) étant séparé du second axe central (B) de la seconde chambre (8),
le premier axe central (A) étant parallèle au second axe central (B), et
la direction longitudinale (L) du dispositif de filtre (5) étant perpendiculaire au premier axe central (A) et au second axe central (B)
**caractérisée par** un couvercle (12) couvrant la première chambre (6) et la seconde chambre (8).

2. Dispositif de filtre (5) selon la
revendication 1, dans lequel un diamètre de la première chambre (6) est inférieur à un diamètre de la seconde chambre (8).

3. Dispositif de filtre (5) selon l'une quelconque des revendications précédentes, dans lequel le filtre (11) présente la forme d'un cône tronqué comportant des surfaces filtrantes le long de parois latérales du cône tronqué.

4. Dispositif de filtre (5) selon la revendication 1 ou 2, dans lequel le filtre (11) présente la forme d'un cylindre comportant des surfaces filtrantes le long de parois latérales du cylindre.

5. Dispositif de filtre (5) selon l'une quelconque des revendications précédentes, dans lequel la première chambre (6) est prolongée par un bord entourant partiellement l'orifice d'entrée (7) et s'étendant dans une direction du premier axe central (A).

6. Dispositif de filtre (5) selon l'une quelconque des revendications précédentes, dans lequel l'orifice de sortie (9) a une étendue qui est décalée relativement à l'étendue de l'orifice d'entrée (7) d'un angle d'approximativement 90°.

7. Dispositif de filtre (5) selon l'une quelconque des revendications précédentes, comprenant, en outre, un orifice de vidange (13) placé au niveau d'une section inférieure de la seconde chambre (8), l'orifice de vidange (13) étant destiné à être raccordé au système de distribution de carburant (1).

8. Système de distribution de carburant (1), comprenant un dispositif de filtre (5) selon l'une quelconque des revendications précédentes.
